# FASCICULE DE BREVET EUROPEEN

(11) **EP 2 991 858 B1**
(45) Date de publication et mention de la délivrance du brevet: **01.11.2017**
(21) Numéro de dépôt: 14727607.5
(22) Date de dépôt: 30.04.2014
(51) Int. Cl.: B60Q 1/26, F21S 8/10, F21V 7/00, G02B 17/00, F21V 8/00

(54) **DISPOSITIF D'ÉCLAIRAGE À LED AVEC SYSTÈME DIFFUSEUR ET EFFET 3D**
3D-EFFEKT-LED-BELEUCHTUNGSVORRICHTUNG MIT STREUUNGSSYSTEM
3D-EFFECT LED ILLUMINATING DEVICE WITH SCATTERING SYSTEM

(30) Priorité: 30.04.2013 FR 1301009
(43) Date de publication de la demande: 09.03.2016
(73) Titulaire: AUTOMOTIVE LIGHTING REAR LAMPS FRANCE, 89330 Saint-Julien-du-Sault (FR)
(72) Inventeur: BUISSON, Alain, F-78190 Trappes (FR)
(74) Mandataire: Jacobacci Coralis Harle
(86) Numéro de dépôt international: PCT/FR2014/051044
(87) Numéro de publication internationale: WO 2014/177816

(56) Documents cités:
- EP-A1- 2 336 632
- EP-A1- 2 390 137
- WO-A1-2009/064607
- WO-A1-2012/105314
- DE-A1-102011 119 859
- GB-A- 2 479 142
- JP-A- 2006 066 176
- KR-A- 20130 011 779
- US-A1- 2013 058 112

## Description

La présente invention concerne le domaine de l'éclairage et de la signalisation, notamment pour les véhicules automobiles. Elle concerne plus particulièrement un dispositif d'éclairage ou de signalisation ayant plusieurs LED comme sources lumineuses, et dans lequel la diffusion spatiale de la lumière émise est améliorée, tandis que la lumière diffusée procure en outre un effet tridimensionnel à sa sortie du dispositif. Un tel dispositif peut être utilisé notamment comme feu de signalisation, clignotant, tant à l'arrière qu'à l'avant d'un véhicule, ou encore comme feu de position ou feu de stop.

La réglementation en vigueur impose, selon les types de véhicules, différents feux d'éclairage ou de signalisation. Mais, outre le volume de l'ensemble des feux, les performances et l'uniformité d'éclairement des feux individuels ainsi regroupés sont des préoccupations majeures. Les documents EP 2 336 632 A1 et KR20130011779 décrivent des dispositifs de signalisation comportant des LED associées à un guide de lumière, à un réflecteur et à un écran semi-transparent permettant grâce à des réflexions multiples de la lumière issues de la face de sortie du guide d'obtenir un effet visuel de profondeur.

On connaît déjà dans l'art antérieur des écrans auxiliaires transparents dans lesquels peut se propager la lumière émise par une source de lumière auxiliaire, ces écrans étant destinés à équiper un feu, notamment arrière, d'un véhicule automobile. Des discontinuités locales prévues dans le matériau de l'écran constituent des foyers de diffusion de la lumière hors de ces écrans (voir publication de brevet français No. 2 868 506).

Dans la demande de brevet allemand DE 101 01 795 sont décrits des feux clignotants, notamment des clignotants avant pour véhicules automobiles, dans lesquels une source de lumière auxiliaire pour feu de position illumine un élément disposé transversalement dans l'espace entre le feu principal et la glace frontale, et procure à travers celle-ci un éclairement de même direction que celle du feu principal.

Dans la demande de brevet français 01 00048, publiée sous le numéro 2 819 040, est décrit un composant d'optique ou de style pour l'éclairage ou la signalisation de véhicules automobiles. Ce composant est en matériau transparent, à l'intérieur duquel des foyers de diffusion de la lumière sont situés uniquement en des endroits prédéterminés pour diffuser la lumière émise par une source associée au dispositif d'éclairage ou de signalisation concerné. Ce composant peut constituer la glace d'un projecteur de véhicule automobile, ou un insert placé dans un tel projecteur.

Dans la demande de brevet allemand DE 103 11 317 est décrit un dispositif d'éclairage pour véhicule comportant un guide de lumière comprenant des structures de diffusion situées essentiellement au foyer de surfaces réfléchissantes qui laissent ainsi diffuser un éclairement homogène.

La demanderesse a également conçu, et a décrit dans la demande de brevet FR 0905984 publiée sous le No. 2953781, un nouveau dispositif pour feu de véhicule automobile, comportant un matériau optique transparent et au moins une source de lumière de type LED agencée pour émettre des rayons lumineux se propageant à l'intérieur de l'épaisseur dudit matériau optique transparent, qui comprend essentiellement:
- une plaque d'un matériau optique transparent formant rideau,
- ladite plaque comportant au moins un renflement allongé bilatéral, de section droite globale substantiellement circulaire, ayant son axe longitudinal moyen dans le plan moyen de ladite plaque et apte à former un guide de lumière, et
- au moins une LED placée à au moins l'une des extrémités dudit guide de lumière, avec son axe principal orthogonal à l'axe longitudinal dudit guide de lumière.

Dans ces diverses applications et ces divers modes de réalisation d'écrans lumineux diffusant la lumière émise par au moins une LED, il peut apparaître des inhomogénéités dans la lumière diffusée, en particulier au niveau des guides dont peuvent être munis les rideaux ou écrans diffuseurs.

Quant à l'éclairage direct par des LED de forte ou de moyenne puissance, il est désormais reconnu qu'il est aveuglant et ne devrait pas être généralisé sous cette forme.

La demanderesse a par ailleurs décrit dans la demande de brevet FR 1200281 du 31.01.2012 un dispositif d'éclairage à LED agencé pour procurer un système diffuseur contribuant à uniformiser le rendu lumineux d'un éclairage avantageusement multi-LED.

Il est alors apparu utile de chercher à uniformiser le rendu lumineux des dispositifs d'éclairage et de signalisation, et/ou à en masquer les éventuelles inhomogénéités, et également à pourvoir de tels dispositifs d'un effet tridimensionnel permettant une personnalisation de l'effet lumineux et en option des effets de style.

La présente invention vise à procurer des moyens pour fournir un éclairage ayant un tel rendu homogène et apportant aux utilisateurs un rendu beaucoup moins fatigant ou moins aveuglant que les éclairages par LED actuellement commercialisés, en même temps que lesdits moyens sont agencés pour procurer un effet tridimensionnel ou effet de profondeur pour les personnes se trouvant dans le champ d'éclairement du dispositif équipé desdits moyens.

Le nouveau dispositif d'éclairage selon l'invention, notamment destiné, mais sans que cela soit limitatif, à un feu de signalisation et/ou à l'éclairage extérieur ou intérieur d'ambiance de l'habitacle de véhicules est défini dans la revendication 1. Bien que le dispositif selon l'invention puisse être de forme et de taille quelconques, il sera décrit dans la suite en référence à un dispositif formant feu d'éclairage, de balisage et/ou de signalisation pour véhicules automobiles, et en référence à un exemple de réalisation dans lequel les parois opaques susdites sont des tranches de cylindres creux au nombre de deux, de rayons respectifs R et r, disposées parallèlement l'une à l'autre, de manière concentrique, et prenant appui sur un PCB sur lequel sont placées n LED, régulièrement ou irrégulièrement espacées l'une de l'autre, tandis que lesdites LED sont disposées de manière à émettre un faisceau lumineux dirigé sensiblement diamétralement dans le couloir de largeur R-r ainsi défini par les plaques opaques susdites.

Dans la pratique, les parois opaques peuvent définir un canal ou couloir annulaire de forme non seulement circulaire, mais encore quadrangulaire, polygonale, ou autres, régulières ou non., ou encore un canal linéaire ou sinueux. Dans ce dernier cas, les parois possèdent des courbures identiques ou homothétiques, de sens de courbure alternés et avec des parties planes intercalées.

Dans une forme de réalisation préférée, les LED sont disposées de manière sensiblement régulière selon une figure géométrique telle que, par exemple, un cercle, sur un substrat de type PCB.

Les éléments (b) de la combinaison de moyens susdite combinent leurs effets avec ceux de la partie (a) pour procurer des effets particulièrement attractifs en termes aussi bien d'intensité lumineuse que de précision des contours et d'originalité des effets de style qu'ils permettent.

L'invention sera mieux comprise, et d'autres objectifs, avantages et caractéristiques de celle-ci apparaîtront plus clairement à la lumière de la description détaillée ci-après d'une forme de réalisation ayant valeur d'exemple illustratif, et de modes de réalisation alternatifs ou optionnels.

Le dispositif selon l'invention procure ses meilleurs résultats en termes de diffusion et de dispersion de la lumière des LED lorsque l'on place les LED ou le PCB portant les LED sous un angle compris entre 0 et environ 20°, et de préférence sous un angle d'environ 15°, par rapport au plan de section transversale des dites plaques formant canal pour la lumière des LED.

On a pu constater qu'ainsi la lumière émise par les LED se réfléchit sur les parois internes du canal défini entre deux plaques opaques et se diffuse/disperse avant de s'acheminer vers la sortie du canal d'où elle est visible par un observateur convenablement placé dans un champ de vision approprié.

Au surplus, l'effet tridimensionnel ainsi procuré est permanent, c'est-à-dire qu'il apparaît à l'oeil humain même quand les LED concernées ne sont pas allumées. Cela permet donc d'obtenir avantageusement et économiquement un effet 3D pour l'image du dispositif d'éclairage concerné, même lorsque celui-ci n'est pas éclairé, en plein jour.

Les modes de réalisation décrits ci-après sont fournis à titre purement illustratif et non-limitatif, notamment en référence aux planches de dessins annexées dans lesquelles:
Fig. 1 représente une vue schématique de face, en élévation, d'un dispositif d'éclairage selon l'invention, sur un socle; et
Fig. 2 représente une vue schématique en coupe transversale suivant A-A du dispositif d'éclairage selon Fig. 1.

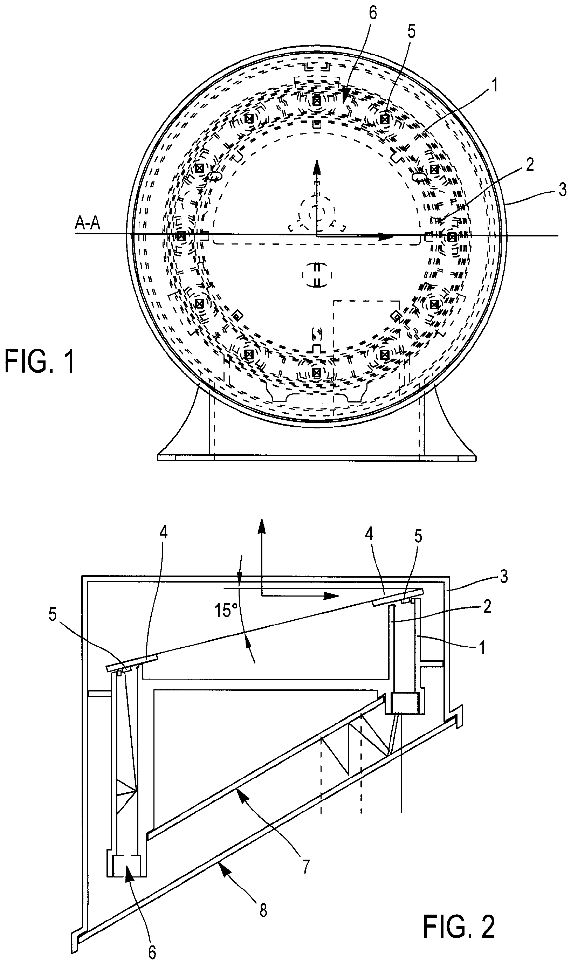

Comme le montrent les Figs. 1 et 2 dans la forme de réalisation qui y est représentée, le dispositif d'éclairage selon l'invention peut comprendre un système de tubes concentriques 1, 2 fixés de manière appropriée à l'intérieur d'un boîtier 3, et fixés sur un socle dans l'exemple illustratif représenté. Dans la pratique, le socle peut être un élément de carrosserie ou de structure d'un véhicule automobile, par exemple.

Dans le fond dudit boîtier est placée une plaquette de circuits imprimés (PCB) 4 comportant des LED 5.

Pour être opérationnel, un tel dispositif est agencé pour être raccordé à une source de courant électrique appropriée.

Comme on peut le voir d'après la Fig. 2, les LED sont avantageusement disposées sous un angle, par exemple d'environ 15°, par rapport au plan transversal des parois formant canal. Leur faisceau lumineux se réfléchit ainsi un maximum de fois sur les parois de ladite couronne.

Un angle identique ou similaire peut être préconisé, mais n'est pas nécessaire pour le plan moyen du réflecteur 7 et de l'écran semi-transparent 8 susdits.

En option, le réflecteur ou miroir susdit peut comporter une épargne (non représentée), c'est-à-dire une partie de surface transparente ou perforée, située en regard d'au moins une LED pour fonction stop et/ou fonction clignotant ou de feu de recul. Cependant, une telle épargne n'est nécessaire dans le dispositif selon la présente invention.

L'écran semi-transparent peut, quant à lui, comporter une épargne en regard de chacun des faisceaux issus des LED ou seulement en regard de certains d'entre eux.

Sous la condition que le refroidissement des LED par leur face arrière ne soit pas entravé, et soit même avantageusement favorisé par des moyens appropriés connus de l'homme du métier, le dispositif modulaire selon l'invention présente l'avantage remarquable de pouvoir être conçu de manière à être extrêmement compact et efficient.

Le dispositif objet de la présente l'invention peut comporter, séparément ou en combinaison, des caractéristiques optionnelles ou alternatives, telles que notamment:
- la plaquette de LED est de géométrie circulaire, avec les n LED (où n est un entier de 4 à 20, de préférence égal à 12) disposées sur son pourtour, de préférence à des distances sensiblement identiques entre deux LED consécutives;
- les LED sont fixées sur une plaquette, sur la face avant de laquelle le tube susdit est disposé en avant de ladite plaquette de LED, avantageusement de telle manière que son axe longitudinal soit perpendiculaire au plan de ladite plaquette;

- au moins la face interne des plaques opaques est constituée d'un matériau de couleur blanche ou similaire et/ou est tapissée d'un revêtement de couleur blanche ou similaire;
- ladite face interne des plaques opaques, c'est-à-dire la face tournée vers l'intérieur du canal qu'elles définissent pour les LED concernées, est de préférence garnie de rugosités. Une telle paroi rugueuse disperse mieux la lumière des LED;
- pour compenser le fait qu'une faible portion du faisceau lumineux des LED peut se trouver atténuée ou perdue par des réflexions non souhaitées ou n'aboutissant pas vers la sortie du canal, il est prévu d'utiliser des LED ayant un flux lumineux maximal plus élevé que les LED actuellement utilisées dans des dispositifs non pourvus de cette canalisation de lumière, par exemple en remplaçant les LED de 20 lumens par des LED de 40 lumens;
- le rapport de la longueur au diamètre dudit tube (hormis la partie terminale renflée) se situe avantageusement dans l'intervalle de 3 à 10, de préférence de 4 à 7, et plus préférablement de 5 environ;
- la largeur du canal entre deux plaques opaques parallèles est de préférence d'environ 10 à 15 mm;
- l'axe d'émission de la lumière est avantageusement parallèle à l'axe appelé classiquement axe X du véhicule;
- la fixation dudit système de canalisation dans l'axe du faisceau principal issu desdites LED s'effectue au moyen d'une fixation appropriée sur la paroi d'un module circulaire porteur des n LED susdites;
- ledit module porteur de LED peut avoir une face avant dont le plan principal est en biais par rapport à l'axe longitudinal dudit système tubulaire;
- l'alimentation des plaquettes de LED en courant électrique s'effectue par des moyens classiques, connus de l'homme du métier;
- le boîtier d'éclairage comporte en outre une vitre transparente sur sa face frontale;
- des moyens pour une fonction stop sans effet 3D peuvent être prévus en complément ou à la place des moyens pour fonction stop avec effet 3D, pour améliorer encore la sécurité au niveau des signaux stop;
- la présence d'épargnes peut être recherchée, en ce sens qu'elle peut procurer, aux endroits et dans les fonctionnalités pour lesquels il en est fait mention, une intensité lumineuse plus élevée et qu'elle confère plus de souplesse à l'ensemble en permettant de maintenir l'éclairage de la fonction concernée au-dessus de la norme le concernant, même en cas de panne d'une LED.

Un évasement terminal 6 desdits tubes est optionnel; il permet d'augmenter la largeur et la luminosité du faisceau quittant ledit tube, et ainsi de donner audit faisceau de rayons lumineux quittant ledit tube une largeur doublée d'une homogénéité exceptionnelles, inhabituelles dans l'état actuel des connaissances de l'homme du métier et des réalisations que celui-ci peut en inférer.

Le diamètre du module susdit peut se situer, par exemple, entre environ 10 et 15 centimètres pour un dispositif d'éclairage principal, tel que par exemple un feu arrière de véhicule automobile.

Le dispositif selon l'invention procure ainsi à l'oeil humain une vision avec effet de mouvement s'apparentant à celui obtenu par la technique des hologrammes, maintenant bien connue. Il procure un effet 3D avec l'écran semi-transparent faisant partie du sous-ensemble (b), et également un effet de style même lorsque le feu concerné est éteint.

Un autre objet de l'invention est constitué par un véhicule automobile équipé d'au moins un dispositif tel que décrit ici.

Dans un tel dispositif, les LED émettent des rayons qui sont pour l'essentiel réfléchis sur la paroi interne desdits tubes; après des réflexions successives d'un même rayon lumineux, celui-ci a acquis une largeur et une homogénéité de faisceau qui font qu'il donne, pour l'oeil humain situé en regard de la sortie desdits tubes, un rayonnement lumineux qui reste puissant, mais est nettement plus homogène et moins aveuglant que le rayonnement émis à l'origine par un même ensemble de LED non équipé du dispositif selon l'invention.

Pour des applications au domaine de l'automobile, l'homme du métier comprendra que le dispositif selon l'invention se place en pratique aux endroits habituels de la carrosserie des véhicules automobiles. De manière plus générale, ledit dispositif peut également être utilisé, avec les adaptations de taille et de configuration appropriées, à l'intérieur de l'habitacle des véhicules automobiles, et même plus généralement à tous usages domestiques ou professionnels, en tout endroit où un éclairage ainsi amélioré par un dispositif selon l'invention est souhaité.

## Revendications

1. Dispositif d'éclairage, notamment pour véhicule automobile, comportant des LED, fixées sur une plaque de circuits imprimés ou PCB, comportant une combinaison de moyens essentiellement composés de:
(a) • en avant de la face éclairante des LED, un système comprenant des plaques parallèles opaques (1, 2) dont au moins l'une des faces est de couleur claire, de préférence de couleur blanche, tandis que les plaques opaques (1,2) définissent un canal ou couloir annulaire de forme circulaire, quadrangulaire, polygonale régulière ou non, ou encore un canal linéaire ou sinueux, et avantageusement un ensemble de tubes concentriques, et
tandis que les LED (5) ou le PCB (4) portant les LED (5) sont placés sous un angle allant jusqu'à environ 20°, et de préférence d'environ 15°, par rapport au plan de section transversale des dites plaques formant canal pour la lumière desdites LED,
• au moins deux desdites plaques parallèles prenant appui sur le PCB (4) et/ou sur son pourtour, respectivement de part et d'autre d'au moins deux LED portées par ledit PCB, de manière à définir un canal dans le fond duquel se trouvent distribuées lesdites LED, et
• lesdites plaques formant paroi se déployant de manière à canaliser la lumière émise par lesdites LED, qui s'échappe dudit dispositif par le côté desdites plaques opposé au côté susdit prenant appui sur ou autour du PCB, et
• la au moins une face de couleur claire ou blanche desdites plaques étant tournée vers l'intérieur dudit canal,
et
(b) à proximité de l'extrémité frontale dudit canal, au niveau de celle-ci ou de préférence en amont de celle-ci dans le sens de l'émission de lumière qui en sort en fonctionnement, un réflecteur (7) sensiblement plan et en aval de celui-ci dans le sens de l'émission/diffusion de lumière en fonctionnement, un écran semi-transparent (8), sensiblement parallèle audit réflecteur et comportant sur au moins l'une de ses deux faces principales des éléments favorisant la dispersion de la lumière incidente,
tandis que ledit réflecteur est fixé et s'étend uniquement à l'intérieur de la surface circonscrite par le profil du pourtour interne de l'extrémité de sortie dudit canal, et
tandis que ledit écran semi-transparent a un profil qui fait face audit réflecteur, à distance de celui-ci et est de dimension plus grande de telle manière qu'il recouvre en outre sensiblement l'extrémité de sortie dudit canal.

2. Dispositif selon la revendication 1, **caractérisé en ce qu'**il comporte en outre une zone de largeur supérieure ou zone évasée à l'extrémité libre dudit canal, par laquelle sort du dispositif la lumière émise par les LED (5) quand celles-ci sont allumées.

3. Dispositif selon l'une des revendications 1 ou 2, **caractérisé en ce que** les parois opaques (1, 2) sont des tranches de cylindres creux au nombre de deux, de rayons respectifs R et r, disposées parallèlement l'une à l'autre, de manière concentrique, et prenant appui sur un PCB (4) sur lequel sont placées n LED (5), régulièrement ou irrégulièrement espacées l'une de l'autre, tandis que lesdites LED sont disposées de manière à émettre un faisceau lumineux dirigé sensiblement diamétralement dans le couloir de largeur R-r ainsi défini par les plaques opaques susdites.

4. Dispositif selon la revendication 1, **caractérisé en ce que** les plaques opaques (1,2) définissent un ensemble de tubes concentriques qui sont fixés à l'intérieur d'un boîtier (3).

5. Dispositif selon l'une quelconque des revendications 1 à 4, **caractérisé en ce que** les LED (5) sont fixées sur une plaquette (4), sur la face avant de laquelle ledit canal se déploie est disposé en avant de ladite plaquette de LED, avantageusement de telle manière que ladite plaquette soit sensiblement inclinée d'environ 15° par rapport à l'axe longitudinal dudit tube.

6. Dispositif selon l'une quelconque des revendications 1 à 5, **caractérisé en ce que** la plaquette (4) de LED (5) est de géométrie circulaire, tandis que les n LED, où n est un entier de 4 à 20, de préférence égal à 12, sont disposées sur son pourtour, de préférence à des distances sensiblement identiques entre deux LED (5) consécutives.

7. Dispositif selon l'une quelconque des revendications 1 à 6, **caractérisé en ce que** la face des plaques opaques (1, 2) tournée vers l'intérieur dudit canal est garnie de rugosités.

8. Dispositif selon l'une quelconque des revendications 4 à 7, **caractérisé en ce qu'**il comporte en outre un évasement terminal (6) desdits tubes, de manière à augmenter la largeur et la luminosité du faisceau de rayons lumineux quittant ledit tube.

9. Dispositif selon l'une quelconque des revendications 1 à 8, **caractérisé en ce que** ledit réflecteur et ledit écran semi-transparent sont sensiblement inclinés d'environ 15° par rapport à l'axe longitudinal dudit tube.

10. Dispositif selon l'une quelconque des revendications 1 à 9, **caractérisé en ce que** ledit dispositif comporte, à proximité de l'extrémité frontale dudit canal, au niveau de celle-ci ou de préférence en amont de celle-ci dans le sens de l'émission de lumière qui en sort en fonctionnement, un réflecteur sensiblement plan (6) et, en aval de celui-ci dans le sens de l'émission/diffusion de lumière en fonctionnement, un écran semi-transparent (7) sensiblement parallèle audit réflecteur et comportant sur au moins l'une de ses deux faces principales des éléments favorisant la dispersion de la lumière incidente,
tandis que ledit réflecteur est fixé et s'étend uniquement à l'intérieur de la surface circonscrite par le profil du pourtour interne de l'extrémité de sortie dudit canal, et
tandis que ledit écran semi-transparent a un profil qui fait face audit réflecteur, à distance de celui-ci et est de dimension plus grande de telle manière qu'il recouvre en outre sensiblement l'extrémité de sortie dudit canal.

## Patentansprüche

1. Beleuchtungsvorrichtung, insbesondere für Kraftfahrzeug, die LEDs umfasst, die auf einer Leiterplatte oder PCB befestigt sind, die eine Kombination von Mitteln umfasst, die im Wesentlichen bestehen aus :
(a) • vor der beleuchteten Seite der LEDs ein System, das opake parallele Platten (1, 2) umfasst, wobei mindestens eine der Seiten eine helle Farbe, bevorzugt Weiß, hat,
wobei die opaken Platten (1, 2) einen Kanal oder ringförmigen Gang mit Kreis-, Viereck-, regelmäßiger oder unregelmäßiger Vieleckform oder auch einen linearen oder gewundenen Kanal definieren, und vorteilhafterweise eine Einheit konzentrischer Röhren, und
wobei die LEDs (5) oder die PCB (4), die die LEDs (5) tragen, unter einem Winkel bis zu etwa 20° und bevorzugt etwa 15° in Bezug zu der Querschnittebene der Platten, die einen Kanal für das Licht der LEDs bilden, platziert sind,
• wobei mindestens zwei der parallelen Platten auf der PCB (4) und/oder auf ihrem Umfang jeweils auf jeder Seite von mindestens zwei LEDs, die von der PCB getragen werden, derart aufliegen, dass ein Kanal definiert wird, in dessen Grund die LEDs verteilt sind, und
• wobei die Platten, die eine Wand bilden, sich derart erstrecken, dass das Licht, das von den LEDs abgegeben wird, das aus der Vorrichtung auf der Seite der Platten, entgegengesetzt zu der Seite, die auf der oder um die PCB aufliegt, austritt, kanalisiert wird, und
• wobei die mindestens eine Seite mit heller oder weißer Farbe der Platten zu dem Inneren des Kanals gerichtet ist,
und
(b) in der Nähe des frontalen Endes des Kanals, im Bereich dieses oder bevorzugt stromaufwärts von diesem in die Richtung der Abgabe des Lichts, das daraus beim Betrieb austritt, einen im Wesentlichen flachen Reflektor (7) und stromabwärts von diesem, in die Richtung des Abgebens/der Streuung von Licht beim Betrieb, einen halb durchsichtigen Schirm (8), der im Wesentlichen zu dem Reflektor parallel ist, und der auf mindestens einer seiner zwei Hauptseiten Elemente trägt, die die Dispersion des einfallenden Lichts begünstigen,
wobei der Reflektor befestigt ist und sich nur im Inneren der von dem Profil des Innenumfangs des Ausgangsendes des Kanals umschriebenen Oberfläche erstreckt, und
wobei der halb durchsichtige Schirm ein Profil hat, das dem Reflektor von diesem beabstandet gegenüberliegt und ein größeres Maß derart hat, dass er außerdem im Wesentlichen das Ausgangsende des Kanals abdeckt.

2. Vorrichtung nach Anspruch 1, **dadurch gekennzeichnet, dass** sie außerdem eine Zone mit einer größeren Breite oder Zone, die an dem freien Ende des Kanals aufgeweitet ist, umfasst, durch die das Licht, das von den LEDs (5) abgegeben wird, wenn sie eingeschaltet sind, aus der Vorrichtung austritt.

3. Vorrichtung nach einem der Ansprüche 1 oder 2, **dadurch gekennzeichnet, dass** die opaken Wände (1, 2) Abschnitte von zwei Hohlzylindern mit den jeweiligen Radien R und r sind, die parallel zueinander konzentrisch angeordnet sind und auf einer PCB (4) aufliegen, auf der n LEDs (5) regelmäßig oder unregelmäßig voneinander beabstandet platziert sind, wobei die LEDs derart angeordnet sind, dass ein Lichtstrahl abgegeben wird, der im Wesentlichen diametral in dem Gang mit der Breite R-r, der so durch die oben erwähnten opaken Platten definiert wird, gelenkt wird.

4. Vorrichtung nach Anspruch 1, **dadurch gekennzeichnet, dass** die opaken Platten (1, 2) eine Einheit konzentrischer Röhren definieren, die in dem Inneren eines Gehäuses (3) befestigt sind.

5. Vorrichtung nach einem der Ansprüche 1 bis 4, **dadurch gekennzeichnet, dass** die LEDs (5) auf einer Platte (4), auf deren Vorderseite sich der Kanal befindet, vor der LEDs-Platte vorteilhafterweise derart angeordnet sind, dass die Platte im Wesentlichen um 15° in Bezug zu der Längsachse der Röhre geneigt ist.

6. Vorrichtung nach einem der Ansprüche 1 bis 5, **dadurch gekennzeichnet, dass** die Platte (4) von LEDs (5) kreisförmige Geometrie hat, wobei die n LEDs, wobei n eine Ganzzahl von 4 bis 20, bevorzugt gleich 12 ist, auf ihrem Umfang bevorzugt in im Wesentlichen identischen Abständen zwischen zwei aufeinanderfolgenden LEDs (5) angeordnet sind.

7. Vorrichtung nach einem der Ansprüche 1 bis 6, **dadurch gekennzeichnet, dass** die Seite der opaken Platten (1, 2), die zu dem Inneren des Kanals gerichtet ist, mit Oberflächenunebenheiten versehen ist.

8. Vorrichtung nach einem der Ansprüche 4 bis 7, **dadurch gekennzeichnet, dass** sie außerdem eine Endaufweitung (6) der Röhren derart umfasst, dass die Breite und die Helligkeit des Bündels von Lichtstrahlen, das die Röhre verlässt, erhöht wird.

9. Vorrichtung nach einem der Ansprüche 1 bis 8, **dadurch gekennzeichnet, dass** der Reflektor und der halb durchsichtige Schirm im Wesentlichen um etwa 15° in Bezug zu der Längsachse der Röhre geneigt sind.

10. Vorrichtung nach einem der Ansprüche 1 bis 9, **dadurch gekennzeichnet, dass** die Vorrichtung in der Nähe des frontalen Endes des Kanals, in dessen Bereich oder bevorzugt stromaufwärts dieses, in die Richtung des Abgebens von Licht, das daraus beim Betrieb austritt, einen im Wesentlichen flachen Reflektor (6) umfasst, und, stromabwärts von diesem in die Richtung des Abgebens/der Streuung von Licht beim Betrieb, einen halb durchsichtigen Schirm (7) im Wesentlichen parallel zu dem Reflektor, und der auf mindestens einer seiner zwei Hauptseiten Elemente utnfasst, die die Dispersion des einfallenden Lichts begünstigen,
wobei der Reflektor befestigt ist und sich nur im Inneren der Oberfläche, die von dem Profil des Innenumfangs des Ausgangsendes des Kanals umschrieben ist, erstreckt, und
wobei der halb durchsichtige Schirm ein Profil hat, das dem Reflektor beabstandet gegenüberliegt und ein größeres Maß derart hat, dass er außerdem im Wesentlichen das Ausgangsende des Kanals abdeckt.

## Claims

1. Illumination device, especially for an automotive vehicle, comprising LEDs, mounted on a printed circuit board or PCB, comprising a combination of means essentially composed of:
(a) • in front of the illuminating face of the LEDs, a system comprising opaque parallel plates (1, 2) at least one of the faces of which is a light colour, preferably a white colour,
whereas the opaque plates (1, 2) define an annular channel or passage having a circular, quadrangular, polygonal shape, regular or not, or a linear or sinuous channel, and advantageously a set of concentric tubes, and
whereas the LEDs (5) or the PCB (4) bearing the LEDs (5) are placed at an angle of up to approximately 20°, and preferably approximately 15°, relative to the transverse section plane of said plates forming a channel for the light from said LEDs,
• at least two of said parallel plates bearing on the PCB (4) and/or on the periphery thereof, respectively on either side of at least one LED borne by said PCB, so as to define a channel at the bottom of which said LEDs are distributed, and
• said plates forming a wall being arranged to channel the light emitted by said LEDs, which escapes from said device via the side of said plates opposite the side mentioned above bearing on or around the PCB, and
• the at least one light- or white-coloured face of said plates being turned towards the interior of said channel,
and
(b) near the front end of said channel, level with said end or preferably upstream thereof in the direction of light emission output in operation, a substantially planar reflector (7) and, downstream thereof in the direction of light emission/scattering in operation, a semi-transparent screen (8), substantially parallel to said reflector and comprising, on at least one of the two main faces thereof, elements promoting the dispersion of the incident light,
whereas said reflector is mounted and only extends inside the surface defined by the profile of the inner periphery of the output end of said channel, and
whereas said semi-transparent screen has a profile facing said reflector, at a distance therefrom and is of a larger size such that it further substantially covers the output end of said channel.

2. Device according to claim 1, **characterised in that** it further comprises an area of greater width or flared area at the free end of said channel, whereby the light emitted by the LEDs (5) when the LEDs are switched on is output from the device.

3. Device according to any of claims 1 or 2, **characterised in that** the opaque walls (1, 2) are hollow cylinder sections, two in number, having respective radii R and r, arranged parallel to one another, concentrically, and bearing on a PCB (4) whereon n LEDs (5) are placed, regularly or irregularly spaced from one another, whereas said LEDs are arranged so as to emit a light beam directed substantially diametrically in the passage of width R-r thus defined by said opaque plates.

4. Device according to claim 1, **characterised in that** the opaque plates (1, 2) define concentric tubes which are mounted inside a housing (3).

5. Device according to any of claims 1 to 4, **characterised in that** the LEDs (5) are mounted on a PCB (4), on the front face of which said channel is formed is arranged in front of said LED PCB, advantageously such that said PCB is substantially inclined by approximately 15° relative to the longitudinal axis of said tube.

6. Device according to any of claims 1 to 5, **characterised in that** the LED (5) PCB (4) has a circular geometry, whereas the n LEDs, where n is an integer from 4 to 20, preferably equal to 12, are arranged on the periphery thereof, preferably at substantially identical distances between two consecutive LEDs (5).

7. Device according to any of claims 1 to 6, **characterised in that** the face of the opaque plates (1, 2) facing the inside of said channel is covered with rough areas.

8. Device according to any of claims 4 to 7, **characterised in that** it further comprises an end flare (6) of said tubes, so as to increase the width and brightness of the beam of light rays leaving said tube.

9. Device according to any of claims 1 to 8, **characterised in that** said reflector and said semi-transparent screen are substantially inclined by approximately 15° relative to the longitudinal axis of said tube.

10. Device according to any of claims 1 to 9, **characterised in that** said device comprises, near the front end of said channel, level with said end or preferably upstream thereof in the direction of light emission output in operation, a substantially planar reflector (6) and, downstream thereof in the direction of light emission/scattering in operation, a semi-transparent screen (7) substantially parallel to said reflector and comprising, on at least one of the two main faces thereof, elements promoting the dispersion of the incident light,
whereas said reflector is mounted and only extends inside the surface defined by the profile of the inner periphery of the output end of said channel, and
whereas said semi-transparent screen has a profile facing said reflector, at a distance therefrom and is of a larger size such that it further substantially covers the output end of said channel.
